# EUROPEAN PATENT SPECIFICATION

(11) **EP 3 508 653 B1**
(45) Date of publication and mention of the grant of the patent: **08.12.2021**
(21) Application number: 18150838.3
(22) Date of filing: 09.01.2018
(51) Int. Cl.: E02B 17/00, E02B 17/02, E04H 12/10, E04H 12/34, F03D 13/25, E04H 12/20

(54) **A MANUFACTURING FACILITY AND METHOD FOR ASSEMBLING A JACKET STRUCTURE**
EINE FERTIGUNGSANLAGE UND VERFAHREN FÜR DEN ZUSAMMENBAU EINER JACKETSTRUKTUR
UNE INSTALLATION DE FABRICATION ET PROCÉDÉ POUR ASSEMBLER UNE CONSTRUCTION DE TYPE JACKET

(43) Date of publication of application: 10.07.2019
(73) Proprietor: Bladt Industries A/S, 9220 Aalborg Øst (DK)
(72) Inventor: NYVANG, Jacob Seier, 9800 Hjørring (DK); ANDERSEN, Jens Peter, 5230 Odense M (DK); HANSEN, Henrik Victor, 5610 Assens (DK); PEDERSEN, Flemming Smidt, 9740 Jerslev J. (DK)
(74) Representative: Zacco Denmark A/S

(56) References cited:
- US-A- 4 080 916
- Anthelion Technology: "How & Where the Indian Oil Rigs stand on the sea?", www.youtube.com , 23 April 2013 (2013-04-23), XP054978595, Retrieved from the Internet: URL:https://www.youtube.com/watch?v=aq2W-g irP_g [retrieved on 2018-08-15]

## Description

### Summary

The invention relates to a jacket structure for a wind turbine, preferably a jacket structure for a wind turbine positioned at an offshore installation site. A jacket structure of the present invention serves to support a wind turbine in an offshore location.

### Background

It is common knowledge within the offshore industry to use jacket structures for offshore wind turbines, where two thirds of the jacket structure are submerged into the water. The water depth is on average 45 m, and the jacket structure would therefore be more than 60 m.

Traditionally the assembling of the jacket structure involves assembling modules of the jacket structure, where each of the modules includes identical leg sections interconnected by braces extending between neighbouring leg sections. The jacket structure would either be a three- or four-legged tapered jacket structure being wider at the bottom and narrower at the top. The modules are hoisted into the desired position on top of each other and the modules are welded together.

The YouTube video with title "How & Where the Indian Oil Rigs stand on the sea?" discloses a manufacturing facility for assembling a jacket structure with the features of the preamble of claim 1.

The URL of this video is https://www.youtube.com/watch?v=aq2W-girP_g and has the following XP number: XP054978588.

One example of a jacket structure is disclosed in EP2067915, where the jacket structure is used for supporting a wind turbine comprising a plurality of legs, a plurality of braces, a plurality of node members arranged on the legs. The jacket structure has a number of node-to-leg connections arranged between the node members and the leg and a number of node-to-brace connections arranged in-between each brace and each node member. Another example can be found in EP2511423 describing a similar jacket structure.

One of the disadvantages of these jacket structures is the associated cost related to the manufacturing and assembling of the jacket structure, as the welding operations of the node-to-brace connections and node-to-leg connections are very time-consuming and therefore require many man-hours to complete.

The general object of the present invention is to provide a manufacturing facility for assembling a jacket structure having an assembling line designed to deliver a full jacket structure without the use of heavy lifting equipment.

A further object of the present invention is to provide a manufacturing facility for assembling a jacket structure having different work stations for performing the different assembling steps.

A further object of the present invention is to provide a modular jacket structure for an offshore structure which is configured to reduce the geographical dependency of a specific manufacturing facility.

A further object of the present invention is to provide a manufacturing facility for assembling a jacket structure where the number of high-cost man-hours in the manufacturing is reduced and where the sourcing of steel material from different locations is enabled, thereby reducing the dependency on the geographical location.

The above objects can be achieved according to claim 1 by a manufacturing facility for assembling a jacket structure comprising a number of subcomponents, each subcomponent including at least one brace and an opposite pair of elongated legs, wherein the manufacturing facility comprises a number of first supports for supporting each of the opposite elongated legs of one subcomponent in a lying down position relative to the ground level of said facility, a number of second supports for supporting the braces and at least one first welding unit for connecting said at least one brace(s) to said opposite elongated legs to form a respective one of said subcomponents, and a first self-propelled unit being configured for moving one of said elongated legs in a lying down position from a storage position to said first supports, wherein said first self-propelled unit or the first support has means, such as rollers, for rotating said elongated leg about a longitudinal axis thereof, when said elongated leg is arranged on said means.

The assembly of the jacket structure according to the present invention does not require a heavy production setup as the assembly of the prefabricated elements offers an assembling setup for a flexible jacket design without height, weight or footprint containment. As wind turbines are increasing in size, it is increasingly important to provide structural stability for the wind turbines. The jacket structure serves as a foundation for the wind turbine at the offshore location.

The manufacturing facility for assembling a jacket structure comprises a number of work stations offering assembly and production of a full jacket structure through a lean assembly line, where each of the assembly lines is designed to deliver one full jacket structure.

The present invention provides a solution having the right balance between the size of the prefabricated parts of the jacket structure, which will be outsourced, and the type of vessel required to bring the prefabricated parts to the final assembly site. This main obstacle is overcome by providing a manufacturing facility for a jacket structure for an offshore structure having a layout that includes the above-mentioned work stations.

The above-described manufacturing facility provides the possibility of assembling a jacket structure for supporting an offshore structure enabling the most profitable way to maximize outsourced man-hours compared to the sourcing of complete jacket structures from remote location.

The above-described manufacturing facility provides the possibility of assembling a jacket structure for supporting an offshore structure having the right balance to make prefabricated elements or prefabricated modules as large as possible.

In accordance with method claim 10 of the present invention, a method of assembling a subcomponent of a jacket structure including a prefabricated brace and a pair of elongated prefabricated legs is provided, the method comprising the following steps: providing a brace, wherein the brace includes a number of elongated tubular elements and wherein said brace has a first brace end and a second brace end; providing a pair of legs, wherein each leg has a tubular section and two node elements including node stubs positioned at opposite ends of a tubular section; wherein the method further comprises the subsequent steps of: arranging a brace on a second support being provided on the ground level of the work station at the assembly site; arranging a first elongated leg on a first leg fixture and arranging a second elongated leg on second leg fixture; aligning the node stubs of the elongated legs relative to the first brace end and second brace end of said brace by means, such as rollers, of a self-propelled unit or of said leg fixtures for rotating the elongated prefabricated leg about a longitudinal axis thereof, when the elongated prefabricated leg is arranged on said means; forming a brace-to-node connection between the brace and the node element, wherein the brace-to-node connection is achieved by a welding process.

In a not claimed aspect, a jacking member is used for guiding a first jacket structure relative to a second jacket structure, said first jacket structure including a plurality of prefabricated braces and a plurality of elongated legs, wherein said jacking mechanism comprises a clamping bracket configured to be connected to an upper part of a first jacket structure, an actuator configured to be mounted on the clamping bracket, wherein said actuator has a first end configured to be connected to a second jacket structure and second end configured to be connected to the first jacket structure.

In this context the term "prefabricated leg" refers to a component where all the weldings between the tubular sections and the node elements including brace stubs have be performed, and the anodes and other external attachments have been welded or connected to the leg prior to the assembly process described in this application.

In this context the term "prefabricated brace" refers to a component where all the welding's between the tubular sections have be performed, and the anodes and other external attachments have been welded or connected to the brace prior to the assembly process described in this application.

In this context the term "self-propelled unit" refers to a platform vehicle with a large array of wheels. The self-propelled unit can be used for transporting massive objects such as large structural sections.

In this context the term "lying down" refers to a horizontal position or a position forming an angle of less than 10 degrees relative to a horizontal position.

In this context the term "welding unit" refers to a unit to be used for performing the welding process. The welding unit comprises a cabin and is fully equipped with all the equipment needed for preforming the welding operations. The welding unit would also include weather protection and the welding unit can be accommodated inside a cargo container. The welding unit is used for welding the prefabricated legs to the prefabricated braces to form a jacket structure or a subcomponent of a jacket structure.

### Detailed description

The invention will now be explained in more detail by means of exemplary embodiments with reference to the drawing. It is to be noted, however, that the appended drawings illustrate only typical embodiments of this invention and are therefore not to be considered as limiting of its scope.
Figure 1 shows a modular jacket structure according to the present invention.
Figure 2 shows a schematic view of a prefabricated leg on a self-propelled unit.
Figure 3 shows a schematic view of two prefabricated legs arranged on a number of supports.
Figure 4 shows a schematic view of two prefabricated legs arranged in respective supports and one prefabricated brace being arranged on second supports.
Figures 5-6 show perspective views of a subcomponent having two prefabricated legs with two prefabricated braces attached, also designated an A-frame of the jacket structure according to the present invention.
Figure 7 shows a perspective view of a subcomponent of the jacket structure having a number of prefabricated braces connected to the each of the prefabricated legs.
Figures 8-10 show perspective views of the upending method according to the present invention.
Figure 11 shows a perspective view of the jacking mechanism according to the present invention.

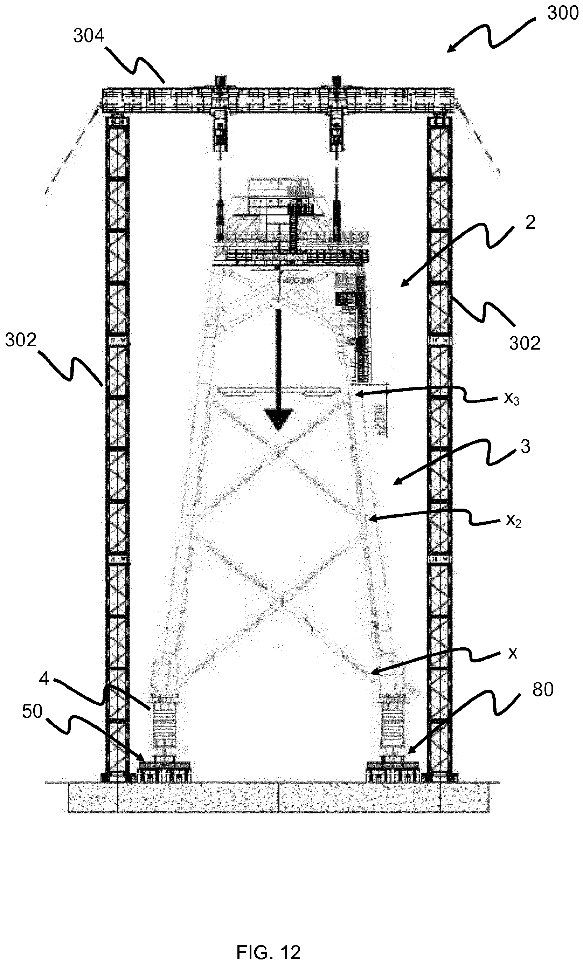

Figure 12 shows the gantry crane for assembling a full jacket structure.

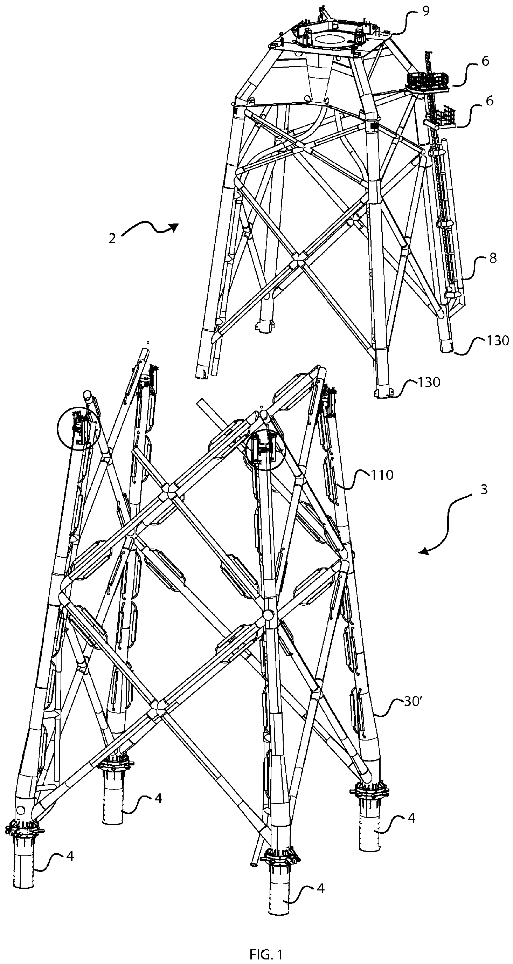

Attention is first directed to FIG. 1 of the drawings. In FIG. 1, the jacket structure 1 for supporting an offshore structure, e.g. the wind turbine of the invention, generally identified by the reference numeral 1. FIG. 1 shows a simplified rendering of a jacket structure used in an offshore location for supporting an offshore structure (not shown). The jacket structure comprises several prefabricated legs 30' interconnected by a plurality of connecting members referred to as braces, and the jacket structure is held in place (in this example) by pile anchors 4 driven into the sea bed.

The jacket structure 1 comprises an upper jacket structure 2 and a lower jacket structure 3, where the upper jacket structure 3 includes the transition piece 9, which serves as the lower support for the wind turbine beneath the wind turbine tower.

Fig. 1 shows a jacket structure as a four-legged steel lattice structure being supported by four pile anchors 4 arranged in each corner of the foundation. The transition piece 9 is connected to the upper jacket structure 2 by welding and the transition piece 9 is used for transferring the load from the wind turbine to the four legs of the jacket structure. The jacket structure could also be a three-legged lattice structure.

The jacket structure is connected to a number of pile anchors 4, and the piles anchors can be installed in several ways, e.g. by pre-pilling by using a pilling template or by pilling through pile sleeves attached to the bases of the legs of the jacket structure.

FIG. 1 shows a jacket structure 3 which is connected to the pile anchors 4, where the installation of the pile anchors 4 is intended to be done by using a pilling template. The pre-pilling template enables precise installation of the pile anchors 4 and the stick-up height prior to installing the jacket structure the pile anchors 4. The pre-pilling template is a steel frame to be placed on the seabed, and once the pile anchors 4 are driven into the seabed, the template can be removed and moved to the next installation location.

The lower jacket structure 3 comprises four prefabricated legs 30 extending substantially in the entire height of the lower jacket structure 3 and havinga hollow tubular structure. The prefabricated legs 30 are formed from a high-strength material such as steel or the like. The four prefabricated legs 30 are slightly angled so that each of the prefabricated legs 30 is gradually oriented inwardly from the base to the top of the lower jacket structure 3.

Instead of using pile anchors, it is within the scope of the present invention to use suction buckets comprising a number of inverted bucket structures. The buckets are installed by placing the buckets at the desired location/position on the seabed. The water trapped within the bucket structure is pumped out from the interior compartment formed by the inverted bucket structure. The bucket structures are forced into the seabed by a combination of the vacuum created inside the bucket structures by the pumping action and the exterior water pressure acting on the external surfaces of the bucket structures.

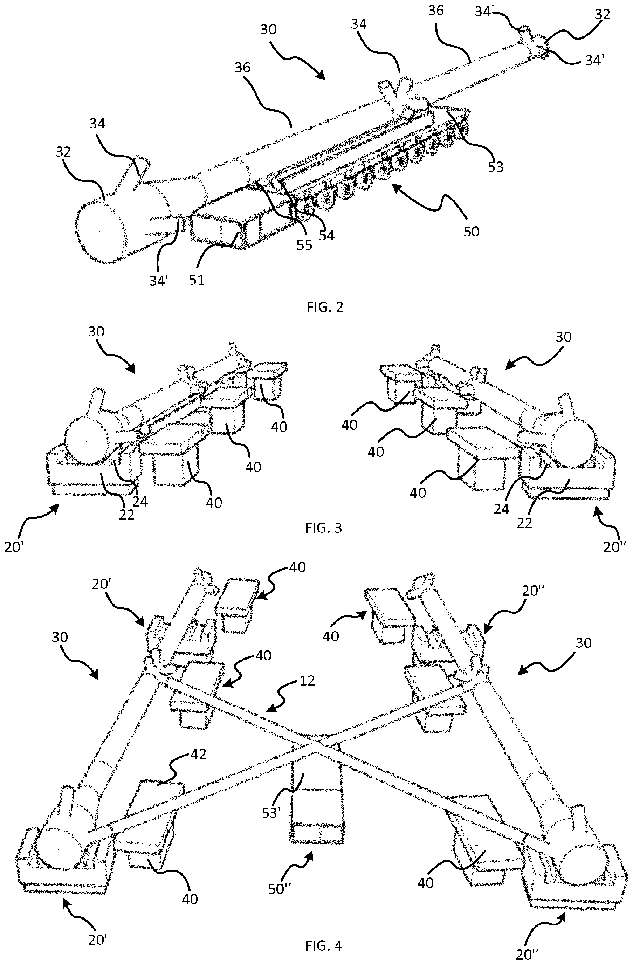

FIGS. 3-10 show the different work stations associated with the manufacturing facility for assembling a jacket structure. As will be evident from the following detailed explanation, the manufacturing facility for assembling a jacket structure comprises a number of work stations offering assembly and production of a full jacket structure through a lean assembly line, where each of the work stations is intended for a specific assignment associated with the assembly line for delivering a full jacket structure.

FIGS. 2-4 show the first work station of the manufacturing facility for assembling a jacket structure 3, which work station comprises a number of first supports 20 for supporting each of the prefabricated legs 30,30', a number of second supports 40 for supporting the prefabricated brace 12 and a welding unit for welding the prefabricated brace 12 to the prefabricated legs 30,30'.

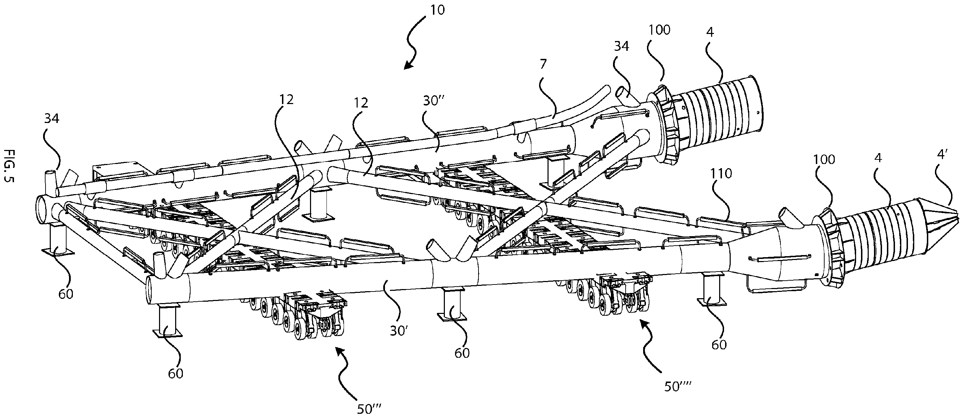

FIGS. 5-10 show the second work station of the manufacturing facility for assembling a jacket structure 3, which work station comprises a number of third supports 20 for supporting each of the prefabricated leg 30,30', a first lifting unit such as a mobile crane (not shown) for positioning a number of second braces 12' perpendicular to each of the prefabricated legs 30,30', a first supporting element for temporarily supporting the second braces 12' and a welding unit for welding the prefabricated brace 12 to the prefabricated legs 30,30'.

Each of the individual work stations shown in the fig. 3-10 can be combined, meaning that it is possible to perform more than one operation in each of the work stations.

Reference is now made to FIGS. 2-4, which show the initial steps in the manufacturing facility for assembling a subcomponent of the jacket structure. The jacket structure includes two subcomponents 10,11 also referred to as A-frames, and each subcomponent 10,11 includes two prefabricated braces 12 and a pair of prefabricated legs 30.

Each of the prefabricated legs 30 shown in FIG. 2-4 has two tubular sections 36 and three node elements 32 including a number of node stubs 34, where each of the node elements 32 is positioned at the end of each of the tubular sections 36. Each of the prefabricated legs 30 will have at least one tubular section 36 and two node elements 32 positioned at the opposite end of the tubular section 36. Each node element 32 includes at least two node stubs 34, 34', and each node of the stubs 34, 34' is positioned at an angle of 30 degrees to 90 degrees relative to the longitudinal direction of the prefabricated leg 30. The arc angle between two neighbouring node stubs stub 34, 34' will be between 30 and 90 degrees.

The length of the prefabricated legs is between 10 m and 70 m. The diameter of the prefabricated legs is between 500 mm and 4000 mm. The weight of the prefabricated legs is between 20 ton and 300 ton. The length of the bracing stubs is between 300 mm and 2000 mm. The diameter of the bracing stubs is between 300 mm and 2500 mm. The distance between the nodes is between 5 m and 30 m.

The length of the prefabricated bracings is between 5 m and 40 m. The diameter of the prefabricated bracings is between 300 mm and 2500 mm. The weight of the prefabricated bracings is between 5 ton and 50 ton.

FIG. 2 shows the initial step in the assembling process of a subcomponent of a full jacket structure, where one part of a subcomponent of the jacket structure 3, more precisely the prefabricated leg 30, is transported to the first work station shown in FIG. 3-4 in a horizontal position.

Each of the prefabricate legs 30 is supported on a self-propelled unit 50 where all the axles are individually controllable in order to evenly distribute weight and steer accurately. The self-propelled unit 50 comprises a housing 51 and a number of axles, a number wheels 52 being arranged on the end of each of the axles of the self-propelled unit 50.

The first self-propelled unit 50' is provided for arranging each of the elongated prefabricated legs 30 on the first supports 20, where the first self-propelled unit 50' has means, such as rollers 54,55, for rotating one of the elongated prefabricated legs 30,30' supported thereby about a longitudinal axis thereof.

The first roller 54 and the second roller 55 are arranged on top of the platform 53 in the longitudinal direction of the self-propelled unit 50 for supporting the prefabricated leg 30.

The second self-propelled unit (50") is provided for arranging said prefabricated brace 12 on the second support 40, where the second self-propelled unit 50" has a fixture 56 for fixating the prefabricated brace 12 during transport of the prefabricated brace 12.

Each axle can swivel through 270°, with some manufacturers offering up to a full 360° of motion. The axles of the self-propelled unit are coordinated by the control system to allow the self-propelled unit to turn, move sideways or even spin in place. The self-propelled unit 50 can be provided with a hydraulic power pack for providing power for steering, suspension and drive functions and these elements would be located in the front or the rear housing of the self-propelled unit 50, 50", 50".

Fig. 3 shows the first work station of the manufacturing facility for assembling the jacket structure 3. The first work station comprises a number of first supports 20 for supporting each of the prefabricated legs 30 and a number of second supports 40 for supporting two prefabricated braces (not shown in fig. 3). The first support 20 comprises a number of first leg fixtures 20' and a number of second leg fixtures 20". The first prefabricated leg 30 will be arranged on the two first leg fixtures 20' by the self-propelled unit 50, and the second prefabricated leg 30' will be arranged on the second leg fixtures 20" by another self-propelled unit 50.

The first leg fixtures 20' and two second leg fixtures 20" being substantially identical. The first leg fixtures 20 will be offset relative to one another both in the first direction corresponding to the longitudinal direction of the prefabricated leg 30 when the prefabricated leg is placed in a horizontal position in the leg fixtures 20 and in the second direction which is perpendicular to the first direction. The prefabricated leg 30 will be supported in a horizontal position at a first end at the first node element 32 of the prefabricated leg 30 and at the midsection of the second tubular section 36 of the prefabricated leg 30.

The first leg fixtures 20' and the second leg fixtures 20" are all hydraulically adjustable and can be positioned on an uneven surface at the assembly site. The upper fixture part 22 of the leg fixtures 20', 20" can be mounted with flexible joints. The first and second leg fixtures 20', 20"are to be positioned at the assembly site by using common forklifts, and by using precision measuring equipment's like laser, it is possible to ensure that each of the first and second leg fixtures is positioned at the intended position prior to the step of arranging the prefabricated legs in the first and second leg fixtures 20', 20".

Each of the upper fixture parts 22 of said leg fixtures includes a number of tapered jaws 44 that are adjustable for retaining the prefabricated legs 30, 30' on the upper fixture part 22. By using a set of tapered jaws 24 it is possible to accommodate tubular elements having a diameter between 0.5 m to 3 m.

The self-propelled unit 50 is equipped with mechanic rollers 54, 55, which enable rotation of the prefabricated legs 30 around the longitudinal axis of the legs prior to the step of positioning the leg in the leg fixture, hereby ensuring that the node stubs 34 are perfectly aligned. The prefabricated legs 30 are positioned by the self-propelled unit 50, and once the prefabricated legs 30 are in the correct position, the self-propelled unit 50 is able to lower the platform 53 hereby allowing the platform 53 and the mechanic rollers 54, 55 to be lowered to a minimum height enabling that the self-propelled unit 50 can drive unhindered underneath and away for the prefabricated legs 30.

In an alternative embodiment of the present invention, the first leg fixtures 20' and the second leg fixtures 20" comprise a number of height-adjustable elements, preferably hydraulic elements, and the upper fixture part 22 of the first leg fixtures 20' and the second leg fixtures 20" can be elevated independently of the self-propelled unit or at the same time as the self-propelled unit 50 is lowered to enhance the clearance between the deck and/or deck rollers 54,55 and the prefabricated legs 30.

Fig. 4 shows the first work station of the manufacturing facility for assembling the jacket structure 3, where the second step in the assembling process of a subcomponent of a full jacket structure is performed. The second step includes arranging the two prefabricated braces 12 on a number of second supports 40. The second supports 40 are used for supporting the prefabricated brace 12, and the two prefabricated braces 12 are arranged in-between the two prefabricated legs 30. The prefabricated braces 12 are driven by a second self-propelled unit 50' to the first work station for performing the second step. The prefabricated braces 12 are, in the shown embodiment, shaped as X-braces, and the prefabricated braces 12 will be supported by an H-profiled beam extending the platform of the second self-propelled unit 50' to ensure stability during the transport to the first work station. However it is within the scope of the present invention to K-braces or half braces.

Referring now to FIGS. 3 and 4, the three second supports 40 are positioned juxtaposed to the node elements 32 of each of the prefabricated legs 30. Each of the second supports 40 comprises a height adjustable element, preferably a hydraulic element, to ensure that the second support 40 can be elevated independently of the self-propelled unit or at the same time as the self-propelled unit 50' is lowered to enhance the clearance between the platform 53' and the prefabricated brace 12.

Preferably, once the prefabricated brace 12 has been placed on the second support 40, an additional centre support (not shown) being identical to the other second supports 40 is to be placed on the ground level for supporting the centre of the prefabricated brace 12 to avoid structural bending during the welding operation, which will be performed as a third step of the present invention.

The first work station of the manufacturing facility for assembling the jacket structure 3 further comprises a welding unit for welding the prefabricated brace 12 to the prefabricated legs 30,30'. The welding unit is not depicted in FIG. 4, but the welding unit comprises a cabin with such a design that it can be positioned and mounted from the side of the connecting point between the prefabricated leg and the prefabricate brace 12. The cabin includes a fixed part as well as a removable part which can be positioned at the connecting point. The cabin is fully equipped with all the equipment needed for preforming the welding operations. The welding unit is preferably a mobile unit arranged on a self-propelled unit.

Referring now to FIGS. 5, 6 and 7, the lower jacket structure 3 comprises a first subcomponent 10 and a second subcomponent 11, where the first subcomponent 10 comprises a first prefabricated leg 30' and a second prefabricated leg 30" and the second subcomponent 11 comprises the third prefabricated leg 30'" and prefabricated leg 30‴. Each of the first and second subcomponents 10, 11 of the lower jacket structure 3 has a tapered configuration, where the distance between the two lower node elements 32' is larger than the distance between the two upper node elements 32" (see FIG. 4).

Referring now to FIG. 5, a number of pile grippers 100 are connected to the prefabricated legs 30', 30" of the jacket structure 3, and the pile grippers 100 are used during grouting between the pile anchors 4 and the prefabricated legs 30 of the jacket structure using a grouting method similar to the one used for grouting a monopile.

By using a piles gripper 100 positioned on each of the prefabricated legs 30', 30" of the jacket structure 3, it is possible to prevent relative movement and displacement between the jacket structure 3 and the pile anchors 4 during the grouting and curing processes. The piles gripper 100 can be welded to the prefabricated leg 30 prior to the assembling process of the jacket structure 3.

Referring now to FIG. 5, the first subcomponent 10 is transported from the first work station to the second work station in a horizontal position. A number of self-propelled units 50 are used for moving the first subcomponent 10 and the self-propelled units 50 are equipped with an elevating platform which can be raised and lowered in order to place the first subcomponent 10 on the third supports 60 arranged on the ground level at the second work station.

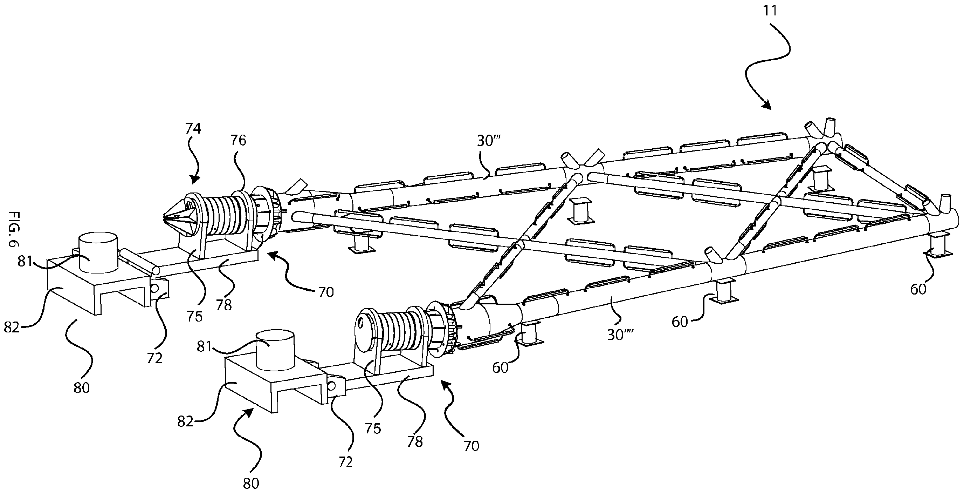

Referring now to FIG. 6, the second subcomponent 11 is transported from the first work station to the second work station through the use of a number of self-propelled units 50 equipped with an elevating platform which can be raised and lowered in order to place the second subcomponent 11 on a number of third supports 60 arranged on the ground level at the second work station.

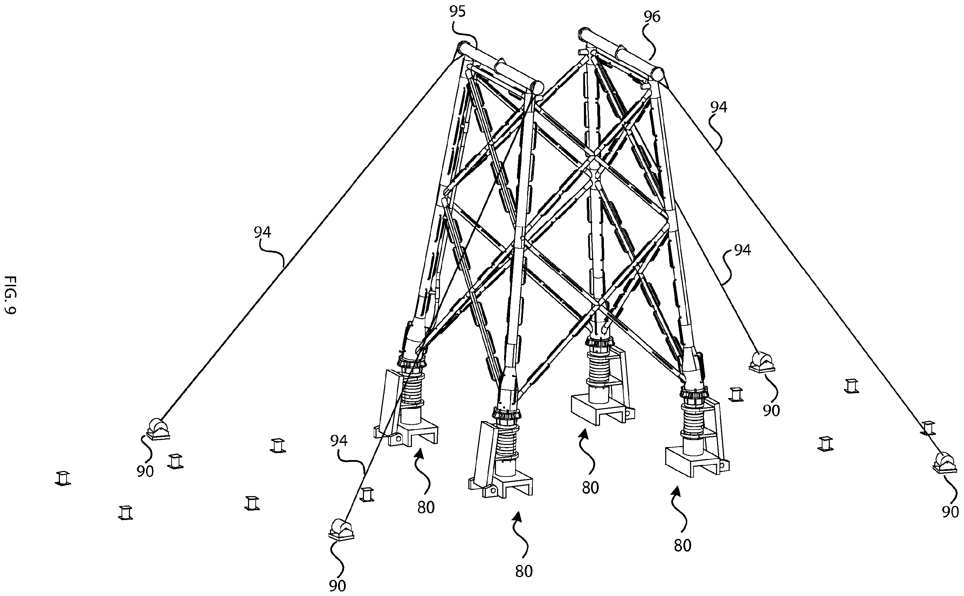

Referring now to FIGS. 6-7, the first subcomponent 10 and the second subcomponent are connected to a number of pivotal hinge mechanisms 70. The pivotal hinge mechanism 70 includes a pivot part 76, a number of clamping elements 74 and a base part 72 being fixated on the ground level of the second work station at the assembling site. The two clamping elements 74 are connected to the lower part of each of the prefabricated legs, preferably to the pile anchors of the prefabricated legs. Each of the clamping elements 74 has a first clamping part 75 being connected to the pivot part 78 and a second clamping part 76 being releasably connected to the first clamping part 75. The second clamping part 76 forms a clamping relative to the fixed first clamping part 75. The second clamping part 76 is removed when the first subcomponent 10 and a second subcomponent 11 are to be positioned on the third supports 60 at the second work station. The second work station further comprises a plurality of supporting elements 80 comprising an annular member 81 forming a receiving portion for the bottom end of the pile 4 (see FIG. 9) and an underframe for supporting the annular member. The under-frame 82 of the supporting element 80 has a height and a width for allowing a self-propelled unit to pass beneath the under frame 82.

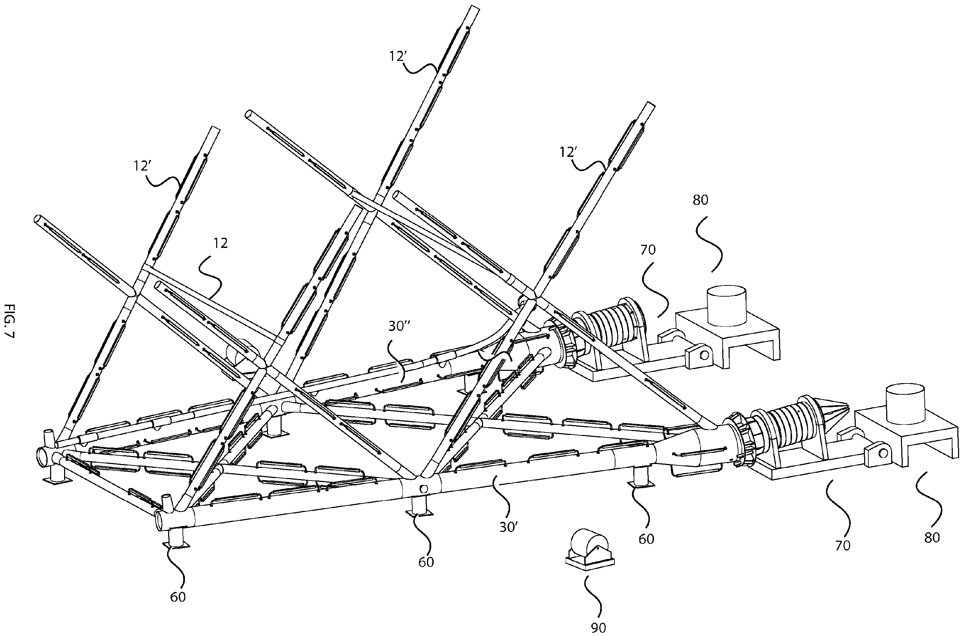

Now referring to FIG. 7, the third supports 60 are used for supporting each of the prefabricated legs 30' of the first subcomponent 10 and a second subcomponent 11. A first lifting unit, such as a mobile crane (not shown), is used for positioning the second prefabricated braces (12') relative to each of the prefabricated legs 30,30′,30ʺ,30‴. In the embodiment shown in FIG. 7, the first subcomponent 10 will form part of a four-legged jacket structure, and the second prefabricated braces (12') are therefore positioned substantially perpendicular to the first prefabricated braces 12, preferably at an angle being nearly 85 degrees relative to the plane of the first prefabricated braces 12. For a three-legged jacket structure, the angle would be 45 degrees.

The second work station further comprises a welding unit for welding the second prefabricated braces 12' to the prefabricated legs 30 of the first subcomponent 10.

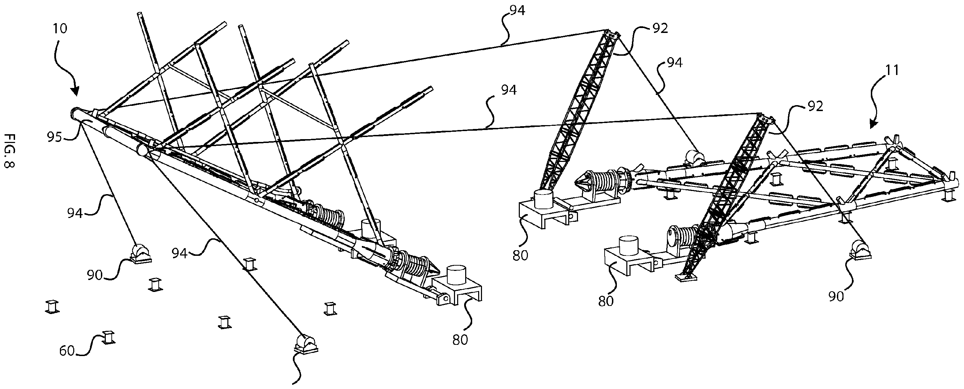

FIGS. 8-10 show the second work station of the manufacturing facility for assembling a jacket structure 3 with a number of pivotal hinge mechanisms 70 for pivoting the subcomponents 10,11. A plurality of supporting elements 80 having under-frame and an annular member are placed juxtaposed to each of the hinge mechanisms 70. The support elements 80 are used for supporting the prefabricated legs 30 after the first subcomponent 10 has been pivoted into a substantially vertical position.

The second work station of the manufacturing facility for assembling a jacket structure 3 further includes an erecting mechanism that comprises two masts 92 and four winches 90 with a number of wires 94 being connected to the upper part of the subcomponents 10. Each of the winches 90 is arranged on the ground level of the second work station at the assembling site.

The two stiffening elements 91 are arranged in-between the second prefabricated braces 12' and span the width of the subcomponents 10. The stiffening elements 91 are connected to the second prefabricated braces 12' prior to the upending of the first subcomponent 10 for supporting the four second prefabricated braces 12' during the upending of the first subcomponent 10 from a horizontal position to a nearly vertical position.

It is evidently, that the upending of the second subcomponent 11, also referred to as the erecting method, is similar to the upending method of the first subcomponent 10.

Common for both the upending of the first subcomponent 10 and that of the second subcomponent 11 is the step of fastening a first temporary erection boom 95 and a second boom 96, respectively, to each of the subcomponents. A first wire end of the first wire 94 of a first winch 90 is connected to the first end of the first boom 95 of the subcomponents 10, and a second winch 90' with a second wire 94 has a first end connected to the first end of the first boom 95 of the subcomponents 10.

A mast 92 is interposed between the first subcomponent 10 and the second winch 90, where the second wire is interconnected with the mast 92. The third winch 90 has a first wire end of the third wire 94 connected to a second end of the first boom 95 of the subcomponents 10, and a fourth winch 90 includes a fourth wire 94 having a first end being connected to the second end of the first boom 95 of the subcomponents 10. A mast 92 is interconnected with a fourth wire 94 positioned between the first subcomponent 10 and the fourth winch 90. By using two sets of winches, it is possible to have full control of the subcomponent during the upending as each of the subcomponents will be controllable in all directions.

The temporary erection boom can be replaced by smaller erection brackets fixed to the jacket legs.

Referring now FIG. 9, the first subcomponent 10 and the second subcomponent 11 are both pivoted into a substantially vertical position in the second work station of the manufacturing facility. The two masts 92 being interposed between the first subcomponent 10 and the second winch 90, respectively, the fourth winch can been removed.

The first winch 90 remains connected to the first end of the first boom 95 of the subcomponents 10, and the third wire 94 also remains connected to a second end of the first boom 95 of the subcomponents 10. This provides the possibility to maintain the first subcomponent in a vertical position relative to the second component prior to welding of the second prefabricated braces 12' of the first subcomponent 10 to the second subcomponent 11 to form a jacket structure (not shown in FIG. 9).

The two lowermost interconnections (X) between the second prefabricated braces 12' of the first subcomponent 10 and the second subcomponent 11 will be made by welding. The welding operation at the first interconnection (x) between the free ends of the second prefabricated braces 12' and the node stubs 34 on the prefabricated leg 30, 30' of the second component 11 can be reached from the ground level of the assembling site by use of a conventional scaffold.

The middle interconnections (x₂) between the second prefabricated braces 12' of the first subcomponent 10 and the second subcomponent 11 can be made by welding or fixated temporarily, as the interconnections at the midsection formed by the second prefabricated braces 12' of the second subcomponent 11 would be welded in the next work station.

The upper connections point (x₃) between the second prefabricated braces 12' of the first subcomponent 10 and the second subcomponent 11 will be fixated temporarily by conventional fixation means such as clamp brackets etc.

The interconnections at top-section will be welded in the third work station.

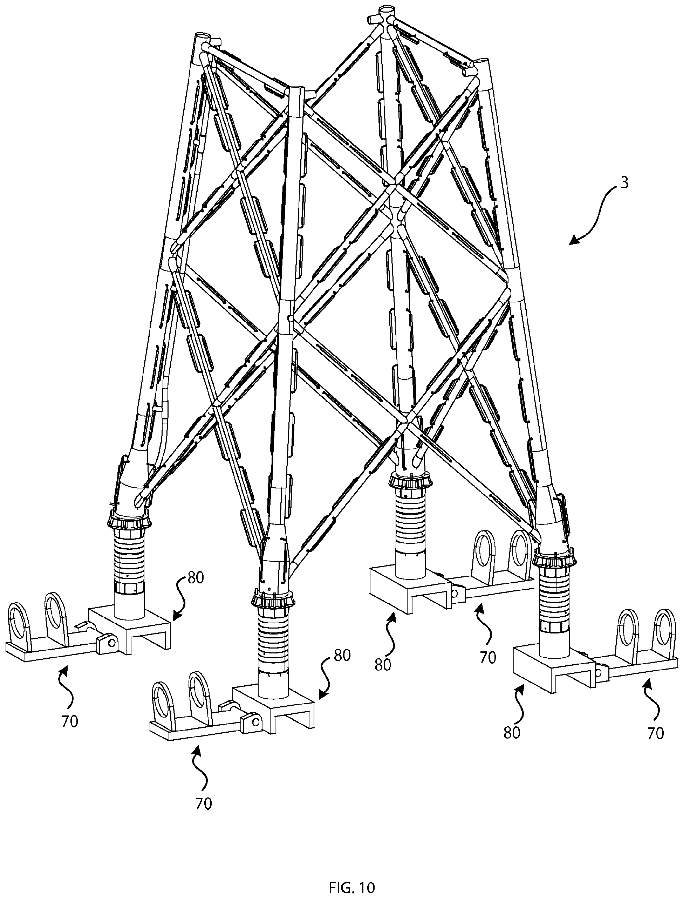

FIG. 10 shows the jacket structure after the first subcomponent 10 and the second subcomponent 11 have been connected to each other at the second work station of the manufacturing facility. Each of the pivotal hinges 70 has released from its connection with the lower part of the jacket structure 3, and the lower jacket structure is now resting on the four supporting elements 80 having under-frame and an annular member.

The support elements 80 will be used for supporting the jacket structure to the next and final assembling site, where the lower jacket structure is to be connected with the upper jacket structure 2 to form a full jacket structure.

Referring now FIG. 10, the upper jacket structure 2 will be hoisted by a lifting unit 300 comprising two elongated lattice elements 302 and a beam 304 element being supported by the two elongated lattice elements 310. The length and hereby the height of the two elongated lattice elements 310 will be 80 m, and the two elongated lattice elements 310 are fixed in a foundation at the third work station of the manufacturing facility for assembling and connecting a jacket structure 3 to an upper jacket structure 2.

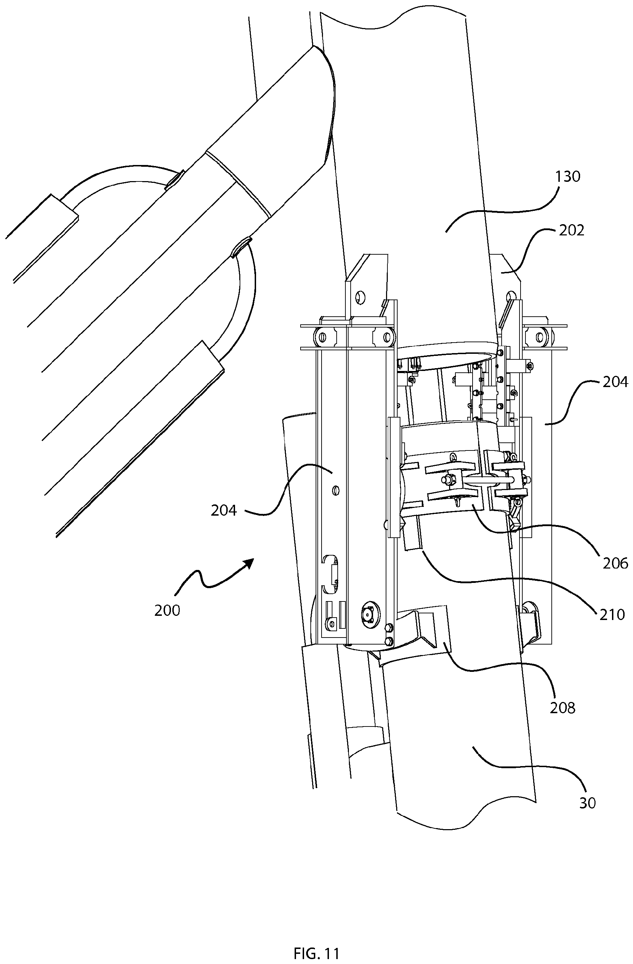

Referring now to FIG. 11, the manufacturing facility further comprises an assembly station for connecting the lower jacket structure 3 to an upper jacket structure 2.

The jacking members 200 are used for guiding the lower jacket structure 3 relative to the upper jacket structure 2, and the jacking mechanism 200 comprises a clamping bracket 206 configured to be connected to an upper part of the first jacket structure 3, a actuator 204 being mounted to the clamping bracket 206, where the actuator has a first end 202 connected to the second jacket structure 2 and second end 208 connected to the first jacket structure 3.

Preferably, two jacking members 200 are connected to the upper end of each of the prefabricated legs 30 and the lower end of each of the legs 130 of the upper jacket structure 2. Preferably, after the gantry crane 300 also referred to as a lifting unit, the work station has hoisted and lowered the upper jacket structure 2 relative to the lower jacket structure 3.

A welding unit is used for welding the lower jacket structure 3 relative to the upper jacket structure 2 along the circumference of the respective legs of the upper and lower jacket structures. The welding unit is also used for welding the interconnections which were not welded in the second welding station. Preferably, the middle and upper interconnections will be welded in the third work station as a large scaffold is needed anyway for performing the welding operations at the intersection of the upper and lower jacket structures.

All the elements used for the jacket structure 3 are made of a metal material to be welded, particularly the connecting brace 12. It is within the scope of the present invention to use corrosion-inhibiting coatings or varnishes to the outer surfaces of the structural element of the jacket structure 3 such as the prefabricated legs and the connecting members, respectively.

In an alternative embodiment of the present invention, it is within the scope to assemble a three-legged jacket structure instead of a four-legged structure as shown in the figures. The second subcomponent would therefore be substituted with one prefabricated leg 30 arranged in the pivot hinge mechanism prior to the upending of the first subcomponent.

In another alternative embodiment of the present invention, it is within the scope to assemble a three-legged jacket structure and a four-legged structure, where the second subcomponent 11 or prefabricated leg 30 would be lifted onto the free end of the second prefabricated brace 12' in the position shown in FIG. 7.

Although the invention has been described above with reference to a number of specific and advantageous embodiments, it is understood that the present invention is by no means limited to the above disclosure of the above described advantageous embodiments. Instead the invention is defined by the appended claims.

### Reference numerals

In the following is given a list of reference numerals that are used in the detailed description of the invention.
jacket structure 1
upper jacket structure 2
lower jacket structure 3
pile anchors 4
boat landing 5
platform 6, 6'
j-tube 7
ladder 8
transition piece 9
first subcomponent 10
second subcomponent 11
prefabricated brace 12, 12'
elongated tubular element 13
first brace end 14
second brace end 16
first support 20
first leg fixtures 20',
second leg fixture 20"
upper fixture part 22
tapered jaw 24
second support 40
prefabricated leg 30, 30'
node element 32
lower node element 32'
upper node element 32"
node stub 34
tubular section 36
self-propelled unit 50, 50' 50", 50'"
front cabin 51
wheel 52
platform 53
first roller 54
second roller 55
deck fixture 56
third support 60
pivotal hinge mechanism 70
base part 72
clamping element 74
first clamping part 75
second clamping part 76
pivot part 78
supporting element 80
winch 90
mast 92
wire 94
first boom 95
second boom 96
pile gripper 100
anode 110
upper jacket leg 130
jacking mechanism 200
first end 202
actuator 204
clamping bracket 206
second end 208
lifting gantry 300
elongated lattice elements 302
beam 304

## Claims

1. A manufacturing facility for assembling a jacket structure (3) comprising a number of subcomponents (10, 11), each subcomponent (10, 11) including at least one brace (12) and an opposite pair of elongated legs (30, 30'), wherein the manufacturing facility comprises:
- a number of first supports (20, 20', 20") for supporting each of the opposite elongated legs (30, 30') of one subcomponent (10, 11) in a lying-down position relative to the ground level of said facility;
- a number of second supports (40) for supporting the braces (12);
- at least one first welding unit for connecting said at least one brace(s) (12) to said opposite elongated legs (30, 30') to form a respective one of said subcomponents (10, 11); and
- a first self-propelled unit (50') being configured for moving one of said elongated legs (30, 30') in a lying down position from a storage position to said first supports (20, 20', 20"), **characterized in that** said first self-propelled unit (50') or the first support (20, 20', 20") has means, such as rollers (54, 55), for rotating said elongated leg (30, 30') about a longitudinal axis thereof, when said elongated leg (30, 30") is arranged on said means.

2. A manufacturing facility according to claim 1, wherein the manufacturing facility further comprises:
- said elongated legs having been prefabricated through assembly of a number of leg portions, such as a tubular section (36) and two node elements (32) including node stubs (34) positioned at opposite ends of said tubular section (16).

3. A manufacturing facility according to claim 1 or 2, wherein the manufacturing facility further comprises:
- a number of third supports (60) for supporting each of said elongated legs of a subcomponent (10, 11);
- a first lifting unit for positioning of a number of further braces (12') in an upright position to each of the elongated legs (30, 30') of said subcomponent (10, 11);
- at least one second welding unit for connecting the further braces (12') to the legs (30, 30') of said subcomponent (10, 11).

4. A manufacturing facility according to claim 2, wherein the manufacturing facility further comprises:
- a second self-propelled unit (50") being configured for moving said braces in a lying-down position from a storage position to said second supports (40);

5. A manufacturing facility according to claim 4, wherein the manufacturing facility further comprises that:
- said second self-propelled unit (50") has a fixture (56) for fixating the brace (12) during transport of the brace (12).

6. A manufacturing facility according to any of the claim 5, wherein the manufacturing facility further comprises:
- a number of hinge mechanisms (70) for pivoting the subcomponents (10, 11), wherein said pivotal hinge mechanism (70) is configured for engaging an end of said legs of said subcomponent (10, 11);
- an erecting mechanism for engaging said subcomponents and raising said subcomponent to an upright position, the whole being engaged by said hinge mechanisms.
- a welding unit for connecting the second braces (12') of a raised subcomponent (10) to a raised subcomponent (11) to form said jacket structure (3);
- a number of supports (80) for supporting the legs (30) after the first subcomponent (10) and the second subcomponent (11) have been pivoted into said raised position.

7. A manufacturing facility according to claim 6, wherein the manufacturing facility further comprises that:
- said pivotal hinge mechanism (70) comprises a movable part 76, at least one clamping element and one base part (72) is fixated on the ground level of the work station at the assembling site;
- an erecting mechanism comprising at least one mast (92) and a number of winches (90) with a corresponding number of wires (94) being connected to the upper part of the subcomponents (10, 11), wherein each of the winches (90) is arranged on the ground level of the work station at the assembling site.

8. A manufacturing facility according to claim 7, wherein the manufacturing facility further comprises;
- a number of self-propelled units (50) for transporting said jacket structure (3) to a further assembling station for assembly with a further structure, such as an another jacket structure (2).

9. A manufacturing facility according to claim 7, wherein said manufacturing facility further comprises an assembly station including:
- at least one welding unit for connecting the jacket structure (3) to the said further jacket structure (2);
- at least one lifting unit (300) for hoisting and lowering the further jacket structure (2) relative to the jacket structure (3); and
- a number of jacking members (200) for guiding the first jacket structure (3) relative to the further jacket structure (2), said jacking mechanism (200) comprising a clamping bracket (206) configured to be connected to an upper part of the jacket structure (3), a actuator (204) being mounted to the clamping bracket (206), wherein said actuator has a first end (202) connected to the further jacket structure (2) and a second end (208) connected to the jacket structure (3).

10. A method of assembling a subcomponent (10, 11) of a jacket structure (3) including a brace and a pair of elongated legs (30), the method comprising the following steps:
- providing a brace, wherein the brace (12) includes a number of elongated tubular elements (12) and wherein said brace has a first brace end (14) and a second brace end (16);
- providing a pair of legs, wherein each leg (30, 30') has a tubular section (36) and two node elements (32) including node stubs (34) positioned at opposite ends of a tubular section (36);
wherein the method further comprises the subsequent steps of:
- arranging a brace (12) on a second support (40) being provided on the ground level of the work station at the assembly site;
- arranging a first elongated leg (30) on a first leg fixture (20) and arranging a second elongated leg (30') on second leg fixture (20');
- aligning the node stubs (34) of the elongated legs (30, 30') relative to the first brace end (14) and second brace end (16) of said brace (12) by means, such as rollers (54, 55), of a self-propelled unit (50, 50', 50") or of said leg fixtures (20) for rotating the elongated prefabricated leg (30, 30') about a longitudinal axis thereof, when the elongated prefabricated leg (30, 30') is arranged on said means;
- forming a brace-to-node connection between the brace (12) and the node element (32), wherein the brace-to-node connection is achieved by a welding process.

11. A method according to claim 10, wherein the step of arranging the braces (12) is performed by one or more self-propelled unit(s) wherein the self-propelled unit (50") has a fixture (56) for fixating the brace (12) during transport of the brace (12).

12. A method according to claim 10 or 11, wherein the step of arranging the braces (12) is performed by one or more self-propelled unit(s), and wherein the self-propelled unit (50') has means, such as rollers (54, 55), for rotating one of the elongated legs (30, 30') supported thereby about a longitudinal axis thereof.

13. A method according to any of the claims 10-12, wherein the step of aligning the node stubs comprises aligning the node stubs (34) relative to the first brace end and is performed by rotating said legs (30, 30') in said leg fixtures relative to the brace (12) or by mechanic rollers (54, 55) mounted on a platform of a self-propelled unit (50, 50', 50").

14. A method according to claim 10, wherein the step of arranging said brace comprises a further step of:
- arranging a second brace (12) on second supports (40), wherein the second brace (12') includes a number of elongated tubular elements (12) and said brace has a third brace end (14) and a fourth brace end (16);
- arranging said first and second brace (12) in-between
- arranging a first leg (30) on a first leg fixture (20') and arranging a second leg (30') on second leg fixture (20"), wherein each leg (30, 30') has a tubular section (16) and two node elements (32) including node stubs (34) positioned at opposite ends of a tubular section (36);
- aligning the node stubs (34) of the legs (30, 30') relative to the first brace end (14) and second brace end (16) of said brace (12).

15. A method of assembling a lower jacket structure and erecting a jacket structure, the method comprising the steps of:
- assembling a subcomponent (10) on the ground level in a lying-down position according to any of the claims 10-14;
- assembling a second subcomponent (11) on the ground according to any of the claims 10-14;
- connecting the further braces (12') to each side of the subcomponent (10);
- raising the subcomponents (10, 11) to a generally vertical position by pivotal action about their respective bases, and joining adjacent edges of the subcomponent (10, 11) to one another.

## Patentansprüche

1. Herstellungsanlage zur Montage einer Mantelstruktur (3), die eine Anzahl von Unterkomponenten (10, 11) umfasst, wobei jede Unterkomponente (10, 11) mindestens eine Strebe (12) und ein gegenüberliegendes Paar von länglichen Schenkeln (30, 30') umfasst, wobei die Herstellungsanlage umfasst:
- eine Anzahl von ersten Trägern (20, 20', 20") zum Tragen jedes der gegenüberliegenden länglichen Schenkel (30, 30') einer Unterkomponente (10, 11) in einer Liegeposition relativ zu dem Bodenniveau der Anlage;
- eine Anzahl von zweiten Trägern (40) zum Tragen der Streben (12);
- mindestens eine erste Schweißeinheit zum Verbinden der mindestens einen Strebe(n) (12) mit den gegenüberliegenden länglichen Schenkeln (30, 30'), um eine jeweilige der Unterkomponenten (10, 11) zu bilden; und
- eine erste selbstangetriebene Einheit (50'), die konfiguriert ist, um einen der länglichen Schenkel (30, 30') in einer Liegeposition von einer Lagerposition zu den ersten Trägern (20, 20', 20") zu bewegen, **dadurch gekennzeichnet, dass** die erste selbstangetriebene Einheit (50') oder der erste Träger (20, 20', 20") Mittel, wie beispielsweise Rollen (54, 55), zum Drehen des länglichen Schenkels (30, 30') um eine Längsachse davon aufweist, wenn der längliche Schenkel (30, 30") auf dem Mittel angeordnet ist.

2. Herstellungsanlage nach Anspruch 1, wobei die Herstellungsanlage ferner umfasst:
- dass die länglichen Schenkel durch die Montage einer Anzahl von Schenkelabschnitten vorgefertigt worden sind, wie beispielsweise einem rohrförmigen Abschnitt (36) und zwei Knotenelementen (32), einschließlich Knotenstutzen (34), die an gegenüberliegenden Enden des rohrförmigen Abschnitts (16) positioniert sind.

3. Herstellungsanlage nach Anspruch 1 oder 2, wobei die Herstellungsanlage ferner umfasst:
- eine Anzahl von dritten Trägern (60) zum Tragen jedes der länglichen Schenkel einer Unterkomponente (10, 11);
- eine erste Hebeeinheit zum Positionieren einer Anzahl von weiteren Streben (12') in einer aufrechten Position zu jedem der länglichen Schenkel (30, 30') der Unterkomponente (10, 11);
- mindestens eine zweite Schweißeinheit zum Verbinden der weiteren Streben (12') mit den Schenkeln (30, 30') der Unterkomponente (10, 11).

4. Herstellungsanlage nach Anspruch 2, wobei die Herstellungsanlage ferner umfasst:
- eine zweite selbstangetriebene Einheit (50"), die konfiguriert ist, um die Streben in einer Liegeposition von einer Lagerposition zu den zweiten Trägern (40) zu bewegen;

5. Herstellungsanlage nach Anspruch 4, wobei die Herstellungsanlage ferner umfasst, dass:
- die zweite selbstangetriebene Einheit (50") eine Halterung (56) zum Fixieren der Strebe (12) während des Transports der Strebe (12) aufweist.

6. Herstellungsanlage nach Anspruch 5, wobei die Herstellungsanlage ferner umfasst:
- eine Anzahl von Scharniermechanismen (70) zum Schwenken der Unterkomponenten (10, 11), wobei der schwenkbare Scharniermechanismus (70) konfiguriert ist, um ein Ende der Schenkel der Unterkomponente (10, 11) in Eingriff zu bringen;
- einen Aufrichtmechanismus, um die Unterkomponenten in Eingriff zu bringen und die Unterkomponenten in eine aufrechte Position anzuheben, wobei der gesamte Eingriff durch die Scharniermechanismen erfolgt,
- eine Schweißeinheit zum Verbinden der zweiten Streben (12') einer angehobenen Unterkomponente (10) mit einer angehobenen Unterkomponente (11), um die Mantelstruktur (3) zu bilden;
- eine Anzahl von Trägern (80) zum Tragen der Schenkel (30), nachdem die erste Unterkomponente (10) und die zweite Unterkomponente (11) in die angehobene Position geschwenkt worden sind.

7. Herstellungsanlage nach Anspruch 6, wobei die Herstellungsanlage ferner umfasst, dass:
- der Schwenkscharniermechanismus (70) ein bewegliches Teil 76 umfasst, mindestens ein Klemmelement und ein Basisteil (72) auf dem Bodenniveau der Arbeitsstation an der Montagestelle befestigt ist;
- einen Aufrichtmechanismus, der mindestens einen Mast (92) und eine Anzahl von Winden (90) mit einer entsprechenden Anzahl von Drähten (94) umfasst, die mit dem oberen Teil der Unterkomponenten (10, 11) verbunden sind, wobei jede der Winden (90) auf dem Bodenniveau der Arbeitsstation an der Montagestelle angeordnet ist.

8. Herstellungsanlage nach Anspruch 7, wobei die Herstellungsanlage ferner umfasst:
- eine Anzahl von selbstangetriebenen Einheiten (50) zum Transportieren der Mantelstruktur (3) zu einer weiteren Montagestation zur Montage mit einer weiteren Struktur, wie beispielsweise einer weiteren Mantelstruktur (2).

9. Herstellungsanlage nach Anspruch 7, wobei die Herstellungsanlage ferner eine Montagestation umfasst, einschließlich:
- mindestens einer Schweißeinheit zum Verbinden der Mantelstruktur (3) mit der weiteren Mantelstruktur (2);
- mindestens einer Hebeeinheit (300) zum Heben und Senken der weiteren Mantelstruktur (2) im Verhältnis zu der Mantelstruktur (3); und
- eine Anzahl von Hebeelementen (200) zum Führen der ersten Mantelstruktur (3) im Verhältnis zu der weiteren Mantelstruktur (2), wobei der Hebemechanismus (200) eine Klemmhalterung (206) umfasst, die konfiguriert ist, um mit einem oberen Teil der Mantelstruktur (3) verbunden zu werden, wobei ein Aktuator (204) an der Klemmhalterung (206) angebracht ist, wobei der Aktuator ein erstes Ende (202), das mit der weiteren Mantelstruktur (2) verbunden ist, und ein zweites Ende (208), das mit der Mantelstruktur (3) verbunden ist, aufweist.

10. Verfahren zur Montage einer Unterkomponente (10, 11) einer Mantelstruktur (3), die eine Strebe und ein Paar länglicher Schenkel (30) umfasst, wobei das Verfahren die folgenden Schritte umfasst:
- Bereitstellen einer Strebe, wobei die Strebe (12) eine Anzahl von länglichen rohrförmigen Elementen (12) umfasst und wobei die Strebe ein erstes Strebenende (14) und ein zweites Strebenende (16) aufweist;
- Bereitstellen eines Paares von Schenkeln, wobei jeder Schenkel (30, 30') einen rohrförmigen Abschnitt (36) und zwei Knotenelementen (32) aufweist, einschließlich Knotenstutzen (34), die an gegenüberliegenden Enden eines rohrförmigen Abschnitts (36) positioniert sind;
wobei das Verfahren ferner die aufeinanderfolgenden Schritte umfasst:
- Anordnen einer Strebe (12) an einem zweiten Träger (40), der auf dem Bodenniveau der Arbeitsstation an der Montagestelle vorgesehen ist;
- Anordnen eines ersten länglichen Schenkels (30) auf einer ersten Schenkelhalterung (20) und Anordnen eines zweiten länglichen Schenkels (30') auf einer zweiten Schenkelhalterung (20');
- Ausrichten der Knotenstutzen (34) der länglichen Schenkel (30, 30') relativ zu dem ersten Strebenende (14) und dem zweiten Strebenende (16) der Strebe (12) durch Mittel, wie beispielsweise Rollen (54, 55), einer selbstangetriebenen Einheit (50, 50', 50") oder der Schenkelhalterungen (20) zum Drehen des länglichen vorgefertigten Schenkels (30, 30') um eine Längsachse davon, wenn der längliche vorgefertigte Schenkel (30, 30') auf dem Mittel angeordnet ist;
- Bilden einer Strebe-zu-Knoten-Verbindung zwischen der Strebe (12) und dem Knotenelement (32), wobei die Strebe-zu-Knoten-Verbindung durch einen Schweißprozess erreicht wird.

11. Verfahren nach Anspruch 10, wobei der Schritt des Anordnens der Streben (12) durch eine oder mehrere selbstangetriebene Einheit(en) durchgeführt wird, wobei die selbstangetriebene Einheit (50") eine Halterung (56) zum Fixieren der Strebe (12) während des Transports der Strebe (12) aufweist.

12. Verfahren nach Anspruch 10 oder 11, wobei der Schritt des Anordnens der Streben (12) durch eine oder mehrere selbstangetriebene Einheit(en) durchgeführt wird, und wobei die selbstangetriebene Einheit (50') Mittel, wie beispielsweise Rollen (54, 55), zum Drehen eines der länglichen Schenkel (30, 30') aufweist, die dadurch um eine Längsachse davon getragen werden.

13. Verfahren nach einem der Ansprüche 10-12, wobei der Schritt des Ausrichtens der Knotenstutzen das Ausrichten der Knotenstutzen (34) im Verhältnis zu dem ersten Strebenende umfasst und durch Drehen der Schenkel (30, 30') in den Schenkelhalterungen relativ zu der Strebe (12) oder durch mechanische Rollen (54, 55), die auf einer Plattform einer selbstangetriebenen Einheit (50, 50', 50") montiert sind, durchgeführt wird.

14. Verfahren nach Anspruch 10, wobei der Schritt des Anordnens der Strebe einen weiteren Schritt umfasst:
- Anordnen einer zweiten Strebe (12) auf zweiten Trägern (40), wobei die zweite Strebe (12') eine Anzahl von länglichen rohrförmigen Elementen (12) umfasst und wobei die Strebe ein drittes Strebenende (14) und ein viertes Strebenende (16) aufweist;
- Anordnen der ersten und zweiten Strebe (12) dazwischen,
- Anordnen eines ersten Schenkels (30) auf einer ersten Schenkelhalterung (20') und Anordnen eines zweiten Schenkels (30') auf einer zweiten Schenkelhalterung (20"), wobei jeder Schenkel (30, 30') einen rohrförmigen Abschnitt (16) und zwei Knotenelemente (32) aufweist, einschließlich Knotenstutzen (34), die an gegenüberliegenden Enden eines rohrförmigen Abschnitts (36) positioniert sind;
- Ausrichten der Knotenstutzen (34) der Schenkel (30, 30') relativ zu dem ersten Strebenende (14) und dem zweiten Strebenende (16) der Strebe (12).

15. Verfahren zur Montage einer unteren Mantelstruktur und Aufrichten einer Mantelstruktur, wobei das Verfahren die folgenden Schritte umfasst:
- Montieren einer Unterkomponente (10) auf dem Bodenniveau in einer Liegeposition nach einem der Ansprüche 10-14;
- Montieren einer zweiten Unterkomponente (11) auf dem Boden nach einem der Ansprüche 10-14;
- Verbinden der weiteren Streben (12') mit jeder Seite der Unterkomponente (10);
- Anheben der Unterkomponenten (10, 11) in eine im Allgemeinen vertikale Position durch Schwenken um ihre jeweiligen Basen und Verbinden benachbarter Kanten der Unterkomponente (10, 11) miteinander.

## Revendications

1. Installation de fabrication pour assembler une structure de type jacket (3) comprenant un certain nombre de sous-composants (10, 11), chaque sous-composant (10, 11) comprenant au moins une entretoise (12) et une paire opposée de jambes allongées (30, 30'), dans lequel l'installation de fabrication comprend :
- un certain nombre de premiers supports (20, 20', 20") pour supporter chacune des jambes allongées opposées (30, 30') d'un sous-composant (10, 11) dans une position couchée par rapport au niveau de sol de ladite installation ;
- un certain nombre de deuxièmes supports (40) pour supporter les entretoises (12) ;
- au moins une première unité de soudage pour raccorder ladite au moins une entretoise (12) auxdites jambes allongées opposées (30, 30') pour former l'un respectif desdits sous-composants (10, 11) ; et
- une première unité autopropulsée (50') étant configurée pour déplacer l'une desdites jambes allongées (30, 30') dans une position couchée depuis une position de stockage auxdits premiers supports (20, 20', 20"), **caractérisée en ce que** ladite première unité autopropulsée (50') ou le premier support (20, 20', 20") comporte des moyens, tels que des rouleaux (54, 55), pour faire tourner ladite jambe allongée (30, 30') autour d'un axe longitudinal de celle-ci, lorsque ladite jambe allongée (30, 30") est arrangée sur lesdits moyens.

2. Installation de fabrication selon la revendication 1, dans laquelle l'installation de fabrication comprend en outre :
- lesdites jambes allongées ayant été préfabriquées par assemblage d'un certain nombre de parties de jambe, telles qu'une section tubulaire (36), et de deux éléments de nœud (32) comprenant des bouts de nœud (34) positionnés aux extrémités opposées de ladite section tubulaire (16).

3. Installation de fabrication selon la revendication 1 ou 2, dans laquelle l'installation de fabrication comprend en outre :
- un certain nombre de troisièmes supports (60) pour supporter chacune desdites jambes allongées d'un sous-composant (10, 11) ;
- une première unité de levage pour le positionnement d'un certain nombre d'autres entretoises (12') dans une position verticale à chacune des jambes allongées (30, 30') dudit sous-composant (10, 11) ;
- au moins une deuxième unité de soudage pour raccorder les autres entretoises (12') aux jambes (30, 30') dudit sous-composant (10, 11).

4. Installation de fabrication selon la revendication 2, dans laquelle l'installation de fabrication comprend en outre :
- une deuxième unité autopropulsée (50") étant configurée pour déplacer lesdites entretoises dans une position couchée à partir d'une position de stockage auxdits deuxièmes supports (40).

5. Installation de fabrication selon la revendication 4, dans laquelle l'installation de fabrication comprend en outre :
- ladite deuxième unité autopropulsée (50") comportant un dispositif de fixation (56) pour fixer l'entretoise (12) pendant le transport de l'entretoise (12).

6. Installation de fabrication selon la revendication 5, dans laquelle l'installation de fabrication comprend en outre :
- un certain nombre de mécanismes de charnière (70) pour faire pivoter les sous-composants (10, 11), ledit mécanisme de charnière pivotant (70) étant configuré pour engager une extrémité desdites jambes dudit sous-composant (10, 11) ;
- un mécanisme d'érection pour mettre en prise lesdits sous-composants et soulever ledit sous-composant vers une position verticale, l'ensemble étant mis en prise par lesdits mécanismes de charnière,
- une unité de soudage pour raccorder les deuxièmes entretoises (12') d'un sous-composant surélevé (10) à un sous-composant surélevé (11) pour former ladite structure de type jacket (3) ;
- un certain nombre de supports (80) pour supporter les jambes (30) après que le premier sous-composant (10) et le deuxième sous-composant (11) ont été pivotés dans ladite position relevée.

7. Installation de fabrication selon la revendication 6, dans laquelle l'installation de fabrication comprend en outre :
- ledit mécanisme d'articulation pivotant (70) comprend une partie mobile 76, au moins un élément de serrage et une partie de base (72) est fixée au niveau du sol du poste de travail au site d'assemblage ;
- un mécanisme d'érection comprenant au moins un mât (92) et un certain nombre de treuils (90) avec un nombre correspondant de fils (94) étant connectés à la partie supérieure des sous-composants (10, 11), chacun des treuils (90) étant disposée au niveau du sol du poste de travail au site d'assemblage.

8. Installation de fabrication selon la revendication 7, dans laquelle l'installation de fabrication comprend en outre :
- un certain nombre d'unités autopropulsées (50) pour transporter ladite structure de type jacket (3) vers un autre poste d'assemblage pour l'assemblage avec une autre structure, telle qu'une autre structure de type jacket (2).

9. Installation de fabrication selon la revendication 7, dans laquelle ladite installation de fabrication comprend en outre poste d'assemblage comprenant :
- au moins une unité de soudage pour raccorder la structure de type jacket (3) à ladite autre structure de type jacket (2) ;
- au moins une unité de levage (300) pour hisser et abaisser l'autre structure de type jacket (2) par rapport à la structure de type jacket (3) ; et
- un certain nombre d'éléments de levage (200) pour guider la première structure de type jacket (3) par rapport à l'autre structure de type jacket (2), ledit mécanisme de type jacket (200) comprenant un support de serrage (206) configuré pour être raccordé à une partie supérieure de la structure de type jacket (3), un actionneur (204) étant monté sur le support de serrage (206), ledit actionneur ayant une première extrémité (202) raccordée à l'autre structure de type jacket (2) et une deuxième extrémité (208) raccordée à la structure de type jacket (3).

10. Procédé d'assemblage d'un sous-composant (10, 11) d'une structure de type jacket (3) comprenant une entretoise et une paire de jambes allongées (30), le procédé comprenant les étapes suivantes :
- la fourniture d'une entretoise, l'entretoise (12) comprenant un certain nombre d'éléments tubulaires allongés 12) et ladite entretoise ayant une première extrémité d'entretoise (14) et une deuxième extrémité d'entretoise (16) ;
- la fourniture d'une paire de jambes, chaque jambe (30, 30') ayant une section tubulaire (36) et deux éléments de nœud (32) comprenant des bouts de nœud (34) positionnés aux extrémités opposées d'une section tubulaire (36) ;
le procédé comprenant en outre les étapes subséquentes consistant à :
- disposer une entretoise (12) sur un deuxième support (40) étant prévu au niveau du sol du poste de travail au site d'assemblage ;
- disposer une première jambe allongée (30) sur une première fixation de jambe (20) et disposer une deuxième jambe allongée (30') sur une deuxième fixation de jambe (20') ;
- aligner les bouts de nœud (34) des jambes allongées (30, 30') par rapport à la première extrémité d'entretoise (14) et à la deuxième extrémité d'entretoise (16) de ladite entretoise (12) par des moyens, tels que des rouleaux (54, 55), d'une unité autopropulsée (50, 50', 50") ou desdites fixations de jambe (20) pour faire tourner la jambe préfabriquée allongée (30, 30') autour d'un axe longitudinal de celle-ci, lorsque la jambe préfabriquée allongée (30, 30') est disposée sur lesdits moyens ;
- former une liaison d'entretoise à nœud entre l'entretoise (12) et l'élément de nœud (32), la liaison d'entretoise à nœud étant réalisée par un procédé de soudage.

11. Procédé selon la revendication 10, dans lequel l'étape d'arrangement des entretoises (12) est effectuée par une ou plusieurs unités autopropulsées, l'unité autopropulsée (50") comportant une fixation (56) pour fixer l'entretoise (12) lors du transport de l'entretoise (12).

12. Procédé selon la revendication 10 ou 11, dans lequel l'étape d'arrangement des entretoises (12) est effectuée par une ou plusieurs unités autopropulsées, et dans lequel l'unité autopropulsée (50') comporte des moyens, tels que des rouleaux (54, 55), pour faire tourner l'une des jambes allongées (30, 30') supportées ainsi autour d'un axe longitudinal de celle-ci.

13. Procédé selon l'une quelconque des revendications 10 à 12, dans lequel l'étape d'alignement des bouts de nœud comprend l'alignement des bouts de nœud (34) par rapport à la première extrémité d'entretoise et est effectuée en faisant tourner lesdites jambes (30, 30') dans lesdites fixations de jambes par rapport à l'entretoise (12) ou par des rouleaux mécaniques (54, 55) montés sur une plate-forme d'une unité autopropulsée (50, 50', 50").

14. Procédé selon la revendication 10, dans lequel l'étape d'arrangement des entretoises comprend en outre l'étape de :
- l'arrangement d'une deuxième entretoise (12) sur des deuxièmes supports (40), ladite deuxième entretoise (12') comprenant un certain nombre d'éléments tubulaires allongés (12) et ladite entretoise ayant une troisième extrémité d'entretoise (14) et une quatrième extrémité d'entretoise (16) ;
- l'arrangement desdites première et deuxième entretoises (12) entre elles,
- l'arrangement d'un premier pied (30) sur une première fixation de pied (20') et l'arrangement d'un deuxième pied (30') sur une deuxième fixation de pied (20"), chaque pied (30, 30') ayant une section tubulaire (16) et deux éléments de nœud (32) comprenant des bouts de nœud (34) positionnés aux extrémités opposées d'une section tubulaire (36) ;
- l'alignement des bouts de nœud (34) des jambes (30, 30') par rapport à la première extrémité d'entretoise (14) et à la deuxième extrémité d'entretoise (16) de ladite entretoise (12).

15. Procédé d'assemblage d'une structure de type jacket inférieure et d'érection d'une structure de type jacket, le procédé comprenant les étapes consistant à :
- assembler un sous-composant (10) au niveau du sol dans une position couchée selon l'une quelconque des revendications 10 à 14 ;
- assembler un deuxième sous-composant (11) au niveau du sol selon l'une quelconque des revendications 10 à 14 ;
- raccorder les autres entretoises (12') de chaque côté du sous-composant (10) ;
- relever les sous-composants (10, 11) jusqu'à une position généralement verticale par une action de pivotement autour de leurs bases respectives, et joindre les bords adjacents du sous-composant (10, 11) les uns aux autres.
